# DEMANDE DE BREVET EUROPEEN

(11) **EP 2 595 421 A1**
(43) Date de publication de la demande: **22.05.2013**
(21) Numéro de dépôt: 12192270.2
(22) Date de dépôt: 12.11.2012
(51) Int. Cl.: H04W 12/04

(54) **Terminal se connectant à un noeud d'accès par reconnaissance automatique d'une clé d'accès**

(30) Priorité: 21.11.2011 FR 1160590
(71) Demandeur: France Télécom, 75015 Paris (FR)
(72) Inventeur: Ameline, Christophe, 35510 Cesson-Sevigne (FR); Gloanec, Simon, 35000 Rennes (FR)

(57) **Abrégé**

L'invention concerne un terminal de communication apte à se connecter à un noeud d'accès d'un réseau de communication à l'aide d'au moins une première information de connexion, comprenant les moyens suivants :
- obtention d'une représentation visuelle ou sonore de ladite au moins une première information,
- identification de ladite au moins une première information par analyse de la représentation.

## Description

### 1. Domaine de l'invention

Le domaine de l'invention est celui des réseaux d'accès desservant des abonnés à des services de communications électroniques, et plus particulièrement celui de la connexion par liaison radioélectrique d'un terminal mobile à un noeud d'accès sécurisé par une clé d'accès.

### 2. Etat de la technique antérieure

Lorsqu'un utilisateur souhaite connecter son terminal mobile à un réseau d'accès sans fil, il doit lancer sur son terminal une application détectant des noeuds d'accès sans fil disponibles autour du terminal. L'utilisateur doit ensuite sélectionner le bon noeud d'accès dans la liste que lui présente l'application, puis, si le noeud d'accès le requiert, il doit aussi entrer la bonne clé d'accès correspondant à ce noeud d'accès. Cette opération est aussi appelée communément appairage.

L'utilisateur doit non seulement se procurer l'identifiant du noeud d'accès, c'est-à-dire, dans le cas d'un réseau Wi-Fi (ensemble de protocoles de communication sans fil régis par les normes du groupe IEEE 802.11), le SSID (Service Set Identifier en anglais, ou identifiant d'ensemble de services), mais également une clé d'accès si le réseau Wi-Fi est sécurisé. Le terme sécurisé dans le contexte de ce document implique simplement que l'identifiant du noeud d'accès ne suffit pas pour établir la connexion, et qu'il faut y adjoindre au moins une autre information, appelée communément la clé d'accès. Les clés d'accès pour réseaux Wi-Fi existent sous plusieurs formes selon des normes utilisées telles que, par exemple, les familles de normes WEP (Wired Equivalent Privacy en anglais, ou protection des données personnelles équivalente au filaire) ou WPA (Wi-Fi Protected Access en anglais, ou accès Wi-Fi protégé). Ces clés sont constituées d'un nombre élevé de caractères alphanumériques, allant jusqu'à 64 symboles hexadécimaux, voire au-delà, et sont impossibles à mémoriser par un être humain doté de capacités normales. La complexité de la clé est voulue car elle assure ainsi la confidentialité des informations de connexion. En effet, une mémorisation humaine aisée contribuerait à une facilité de divulgation et donc à une augmentation des risques de dissémination non contrôlée de la clé. C'est pourquoi une norme telle que WPA-PSK (WPA Pre-Shared Key en anglais, ou clé WPA pré-partagée), qui permet de remplacer la clé longue par un mot de passe court déterminé par la personne gestionnaire du réseau d'accès, pose des problèmes de confidentialité.

La personne gestionnaire du réseau d'accès, qui détient la chaine de caractères alphanumériques représentant la clé d'accès, doit donc la communiquer à l'utilisateur.

Deux alternatives se présentent au gestionnaire pour communiquer la chaine de caractères à l'utilisateur : il peut soit la lui dicter, soit la lui montrer.

La chaine de caractères doit donc être écoutée ou lue par l'utilisateur, caractère par caractère, pour être éventuellement retranscrite sur un support matériel quelconque pour un usage ultérieur. Ensuite elle doit être entrée par l'utilisateur dans l'application d'appairage de son terminal, caractère par caractère, en général à l'aide d'un clavier, qui est souvent de petite taille.

Ce processus manuel est long, fastidieux et surtout susceptible d'erreurs résultant en l'échec de la procédure d'appairage qui doit être recommencée. Les erreurs peuvent provenir de sources multiples: la séquence de caractères peut être mal lue, mal écrite ou mal prononcée par le gestionnaire ; elle peut être mal lue, mal entendue ou mal tapée sur son clavier de terminal par l'utilisateur. De plus, certaines écritures manuscrites peuvent être difficilement lisibles, et certaines prononciations difficilement compréhensibles.

Il existe donc un besoin pour une solution d'appairage ne présentant pas ces inconvénients.

### 3. Exposé de l'invention

L'invention vient améliorer la situation à l'aide d'un terminal de communication apte à se connecter à un noeud d'accès d'un réseau de communication à l'aide d'au moins une première information de connexion, le terminal comprenant les moyens suivants:
- obtention d'une représentation sonore de ladite au moins une première information,
- identification de ladite au moins une première information par analyse de la représentation.

En obtenant une représentation sonore de l'information de connexion, perceptible ou non par une oreille humaine, l'information étant par exemple une clé d'accès constituée d'une chaîne de caractères alphanumériques, puis en analysant cette représentation, le terminal reconstruit la chaine de caractères sans faire intervenir l'ouïe, la vue ou le toucher de l'utilisateur. Toute erreur d'origine humaine est ainsi évitée dans l'opération d'appairage effectuée avec la clé ainsi construite.

Selon un aspect de l'invention, les moyens d'obtention comprennent des moyens d'acquisition de ladite représentation.

Si la représentation ne peut pas être émise vers le terminal par le point d'accès ou par un autre équipement, l'avantage de cet aspect de l'invention est de permettre au terminal d'acquérir directement la représentation, par exemple à l'aide d'une fonction d'enregistrement sonore, disponible dans le terminal. La collaboration du point d'accès pour l'obtention de la représentation par le terminal n'est donc pas nécessaire.

Selon un aspect de l'invention, ladite représentation est générée par des moyens de restitution connectés au noeud d'accès.

L'avantage de cet aspect de l'invention est de permettre au terminal de profiter de moyens de production d'une représentation d'au moins une information de connexion, ces moyens existant préalablement dans le noeud d'accès ou dans d'autres équipements différents du terminal mais déjà connectés au noeud d'accès. Par exemple, dans les cas où une représentation de la clé d'accès n'est pas disponible sous une forme particulière, il est possible d'en faire générer la représentation par un haut-parleur grâce à une requête émise par un terminal déjà connecté au noeud d'accès, ou une requête effectuée directement sur l'équipement mettant en oeuvre le noeud d'accès.

En prenant comme exemple le réseau domestique, la génération d'un signal sonore peut être demandée via une télécommande de téléviseur ou via un clavier et une souris d'ordinateur, dès lors que le téléviseur ou l'ordinateur est connecté à la passerelle domestique constituant le point d'accès à l'Internet. Le signal sonore sera alors généré par le haut-parleur du téléviseur ou de l'ordinateur.

En prenant un autre exemple, celui d'un café Internet, la clé d'accès est fréquemment modifiée pour des raisons de sécurité et sa représentation n'est pas disponible sur un support permanent. Elle sera par exemple générée sous forme de signal sonore pour le client.

Selon un aspect de l'invention, les moyens d'obtention comprennent des moyens de reconnaissance d'un type de représentation parmi un groupe de types de représentation, et des moyens de sélection de moyens d'analyse adaptés au type de représentation.

L'information de connexion peut être représentée de différentes façons requérant chacune des moyens d'analyse différents. Avantageusement, lorsque le terminal est doté de plusieurs moyens d'analyse différents, il reconnait automatiquement le type de représentation lors de son obtention, ce qui lui permet d'appliquer à la représentation les moyens d'analyse correspondants et ainsi d'identifier l'information de connexion.

Selon un aspect de l'invention, le groupe de types de représentation comprend au moins les suivants:
- signal sonore constitué de fréquences multiples,
- signal vocal.

Selon un aspect de l'invention, la représentation de ladite au moins une première information comprend un signal sonore et les moyens d'identification comprennent des moyens d'analyse de signal sonore.

L'avantage de cet aspect de l'invention est d'obtenir la représentation de l'information par des moyens de capture de son tels que permis par la fonction d'enregistrement sonore disponible sur la plupart des terminaux mobiles. Dans ce cas, les types de représentation que le terminal peut obtenir et analyser sont par exemple des signaux sonores constitués de fréquences multiples, perceptibles ou non par une oreille humaine, ou des signaux vocaux.

Plutôt que de montrer le support imprimé contenant la clé d'accès, le gestionnaire peut en effet préférer la dicter à l'utilisateur en la lisant caractère par caractère. A son tour, plutôt que de noter la chaîne de caractères sur un support quelconque ou de l'entrer immédiatement sur l'application d'appairage de son terminal, l'utilisateur peut préférer l'enregistrer sous sa forme sonore pour effectuer l'appairage à un moment ultérieur, et éviter ainsi des erreurs de retranscription.

Plutôt que de dicter les caractères de la clé d'accès, le gestionnaire peut aussi utiliser d'autres moyens de production de signal sonore.

Selon un aspect de l'invention, les moyens d'analyse comprennent des moyens de reconnaissance appartenant au groupe comprenant :
- des moyens de reconnaissance de fréquences multiples,
- des moyens de reconnaissance vocale de caractères.

Lorsque les moyens de reconnaissance sont des moyens de reconnaissance de fréquences multiples, l'avantage de cet aspect de l'invention est d'analyser la représentation de l'information par des moyens de détection de fréquences multiples dont les différentes combinaisons correspondent chacune à un caractère alphanumérique précis. Ces moyens de détections sont parmi les plus simples à mettre en oeuvre pour le codage et le décodage de caractères par des signaux sonores, perceptibles ou non par une oreille humaine, et ont été abondamment utilisés sous une technique normalisée connue sous le nom de DTMF (Dual-Tone Multi-Frequency en anglais, ou fréquences multiples à deux tons) pour coder et décoder les 10 chiffres et les 6 caractères utilisés dans la signalisation du réseau téléphonique commuté.

Lorsque les moyens de reconnaissance sont des moyens de reconnaissance vocale de caractères, l'avantage de cet aspect de l'invention est d'analyser la représentation de l'information par des moyens de reconnaissance automatique de la parole qui sont des moyens d'analyse efficaces, disponibles facilement et peu couteux. La technologie de reconnaissance automatique de la parole a atteint depuis quelques années une maturité permettant la diffusion à faible coût d'applications spécifiques dans les terminaux mobiles. Leur efficacité est d'autant plus grande que le vocabulaire à reconnaître est limité, ce qui est le cas lorsque l'on considère que le nombre total de caractères alphanumériques différents est extrêmement limité par rapport au vocabulaire d'une langue naturelle.

Selon un aspect de l'invention, l'identification de ladite au moins une première information déclenche automatiquement des moyens de connexion du terminal au noeud d'accès.

L'avantage de cet aspect est de lancer l'application d'appairage sur détection d'une clé d'accès. Ainsi, il n'est plus nécessaire pour l'utilisateur de lancer cette application préalablement à l'obtention de la clé d'accès. Après avoir obtenu une représentation d'une clé d'accès et en reconnaissant que cette représentation est celle d'une clé d'accès, c'est le terminal qui propose à l'utilisateur d'appairer son terminal. Ainsi, l'utilisateur a seulement besoin de capturer une représentation sonore de la clé d'accès avec par exemple la fonction d'enregistrement de son terminal, et éventuellement de confirmer qu'il souhaite bien effectuer l'appairage avec le noeud d'accès proposé par le terminal.

Si plusieurs noeuds d'accès sont proposés par l'application d'appairage et que le premier n'est pas celui correspondant à la clé obtenue, l'utilisateur peut sélectionner lui-même le noeud d'accès dans la liste. Alternativement, l'utilisateur peut laisser le terminal identifier le noeud d'accès de la même façon qu'il a identifié la clé d'accès. Dans ce cas, avant ou après avoir identifié la clé d'accès, le terminal obtient une représentation de l'identifiant du noeud d'accès, puis analyse cette représentation afin d'identifier l'identifiant.

Selon un aspect de l'invention, la représentation obtenue comprend en outre une deuxième information de connexion et les moyens d'identification comprennent des moyens de discrimination entre les informations de connexion.

L'avantage de cet aspect est d'obtenir l'identifiant du noeud d'accès correspondant à la clé par les mêmes moyens que ceux utilisés pour l'obtention de la clé.

En reprenant l'exemple du réseau domestique, il arrive fréquemment, surtout en milieu urbain, que le terminal détecte le rayonnement radioélectrique Wi-Fi de plus d'une passerelle domestique d'accès à l'Internet. L'application d'appairage propose alors plusieurs identifiants de passerelle domestique, dans un ordre dépendant du paramétrage du terminal, de son historique de connexion, de la force des signaux radioélectriques, etc. Un seul de ces identifiants est celui de la passerelle domestique correspondant à la clé. Avantageusement, le terminal peut obtenir le bon identifiant dans la même représentation qui comprend la clé d'accès.

L'invention concerne aussi un procédé d'identification d'au moins une information de connexion, destiné à être mis en oeuvre par le terminal qui vient d'être décrit.

L'invention concerne un programme d'ordinateur comprenant des instructions pour la mise en oeuvre du terminal selon l'invention, lorsque ce programme est exécuté par un processeur.

Ce programme, stocké sur un support lisible par ordinateur, peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne également un support d'enregistrement d'un programme d'ordinateur selon l'invention.

Avantageusement, le programme selon l'invention peut être soit installé sous une forme exécutable dans le terminal selon l'invention, soit installé sous une forme téléchargeable sur un serveur d'applications distinct du terminal. Dans ce dernier cas le programme peut être téléchargé du serveur vers le terminal à l'initiative de l'utilisateur du terminal.

### 4. Présentation des figures

D'autre avantages et caractéristiques de l'invention apparaitront plus clairement à la lecture de la description suivante de modes de réalisation particuliers de l'invention, donnés à titre de simples exemples illustratifs et non limitatifs, et des dessins annexés, parmi lesquels :
- la figure 1 présente les étapes du procédé d'identification d'au moins une première information de connexion selon un premier mode de réalisation de l'invention,
- la figure 2 présente les étapes du procédé d'identification d'au moins une première information de connexion selon un deuxième mode de réalisation de l'invention,
- la figure 3 présente la structure d'un terminal mettant en oeuvre l'invention.

### 5. Description détaillée d'au moins un mode de réalisation de l'invention

Par facilité d'illustration, on considère dans la suite de la description le cas d'un réseau domestique constitué de différents terminaux et d'un noeud d'accès aussi appelé passerelle ; les terminaux du réseau domestique se connectent à la passerelle par une liaison radioélectrique de type Wi-Fi ou par une liaison filaire de type Ethernet, et la passerelle connecte tous les terminaux du réseau domestique à un réseau public tel que l'Internet. Lorsqu'un terminal se connecte à la passerelle par une liaison Wi-Fi, il doit non seulement fournir l'identifiant SSID de la passerelle mais aussi la clé d'accès WEP de la passerelle. Bien entendu, l'invention ne se limite pas à ce cas et s'applique aussi à d'autres types de réseaux que les réseaux domestiques, comme par exemple les réseaux d'entreprise ou les réseaux de lieux publics, à d'autres types de technologies de communication que les technologies radioélectriques, comme par exemple le courant porteur en ligne, à d'autres types de technologies radioélectriques que la norme Wi-Fi, comme par exemple le Bluetooth (norme radioélectrique à courte distance), et à d'autres types de clés d'accès propres à la norme Wi-Fi que WEP, comme par exemple WPA.

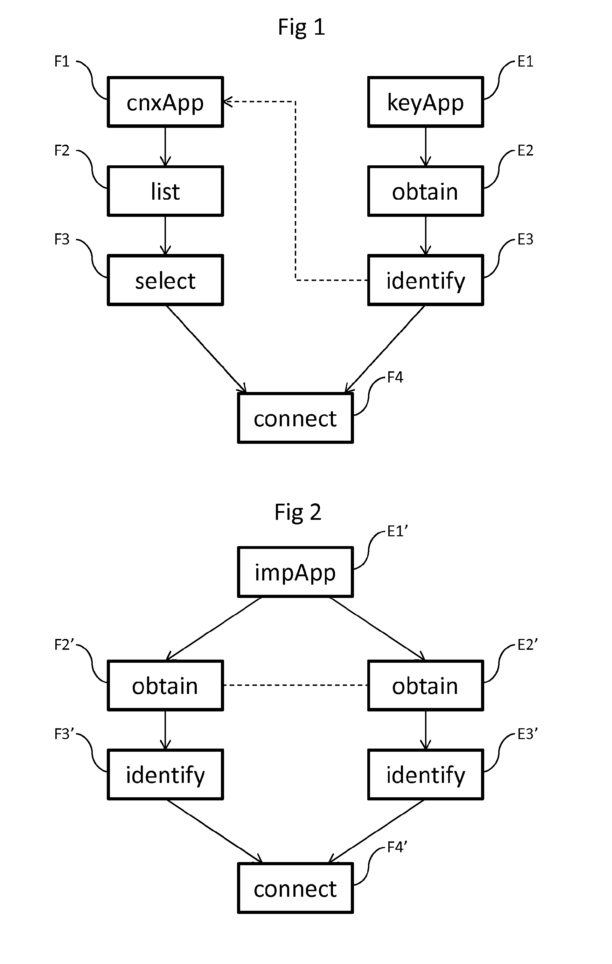

Egalement par facilité d'illustration, les exemples illustrés par les figures 1 et 2 se basent à la fois sur une représentation visuelle par Flashcode de la clé d'accès et sur une représentation par signal sonore de la clé d'accès. Le signal sonore peut être vocal, ou être synthétique comme par exemple un signal DTMF perceptible ou non par une oreille humaine, ou être les deux à la fois.

Un exemple de mise en oeuvre du procédé d'identification d'au moins une première information de connexion selon un premier mode de réalisation de l'invention est maintenant présenté en relation avec la **figure 1****.**

Les étapes E1 à E3 concernent l'identification d'une clé WEP, tandis que les étapes F1 à F3 concernent la sélection d'un identifiant SSID.

Lors d'une étape E1 (keyApp), un utilisateur lance sur son terminal mobile une application dont le but est de récupérer une clé WEP.

Lors d'une étape E2 (obtain), le terminal obtient une représentation d'une clé WEP, par exemple sous forme de code-barres Flashcode et à l'aide de la fonction d'appareil photo du terminal, cette fonction ayant été déclenchée par l'application et l'utilisateur ayant été invité à photographier le Flashcode. Alternativement, la représentation de la clé WEP est un signal sonore et la fonction du terminal est une fonction d'enregistrement sonore.

Lors d'une étape E3 (identify), le terminal analyse l'image photographiée et identifie la clé WEP en reconstruisant la suite de caractères la constituant. Le terminal utilise pour cela une application de lecture de codes-barres, préalablement intégrée ou téléchargée, telle que par exemple Mobiletag (nom commercial), qui extrait les caractères codés dans le Flashcode. De façon connue, les lecteurs de code-barres en général et de Flashcode en particulier fonctionnent sur la base du décodage d'un espace constitués de zones noires et blanches représentant des bits de valeur 0 ou 1, le codage préalable de l'information ayant le plus souvent également inclus un code correcteur d'erreurs rendant la phase de décodage robuste à certaines dégradations de la qualité de la représentation du Flashcode. Alternativement, le terminal analyse le signal sonore enregistré et identifie la clé WEP en reconstruisant la suite de caractères la constituant. Le terminal peut utiliser pour cela une application de reconnaissance vocale de caractères, préalablement intégrée ou téléchargée, telle que par exemple Dragon Dictate (nom commercial) de la société Nuance. De façon connue, les logiciels et applications de reconnaissance vocale de caractères fonctionnent sur la base de la numérisation d'un signal sonore analogique généré par une lecture à voix haute des caractères, et du calcul d'une distance entre le signal numérisé à reconnaître et une bibliothèque d'échantillons connus, les échantillons étant le plus souvent modélisées statistiquement afin de permettre la plus grande variété possible dans les signaux à analyser.

Les étapes F1 à F3 peuvent être exécutées après ou avant les étapes E1 à E3.

Lors d'une étape F1 (cnxApp), l'utilisateur lance sur son terminal mobile une application dite « d'appairage », dont le but est de connecter le terminal à un point d'accès Wi-Fi.

Lors d'une étape F2 (list), le terminal affiche les points d'accès Wi-Fi qu'il a détectés. Ces points d'accès sont affichés à l'aide de leur identifiant SSID.

Lors d'une étape F3 (select), l'utilisateur sélectionne le SSID qui correspond à la clé WEP faisant l'objet des étapes E1 à E3.

Lors d'une étape F4 (connect) ultérieure aussi bien à l'étape E3 que F3, le terminal se connecte au point d'accès Wi-Fi à l'aide du SSID sélectionné et de la clé WEP identifiée.

Dans ce premier mode de réalisation l'utilisateur n'a besoin d'effectuer que 4 manipulations simples sur son terminal mobile : le lancement de l'application dont le but est de récupérer une clé WEP, la prise de photographie d'une représentation de la clé WEP ou l'enregistrement de sa représentation sonore, le lancement de l'application d'appairage et la sélection du SSID. Il n'a jamais besoin d'entrer de chaine de caractères.

Dans une variante avantageuse, illustrée par la flèche pointillée de la **figure 1****,** l'identification d'une clé WEP lors de l'étape E3 déclenche l'étape F1 sans que l'utilisateur doive lancer manuellement l'application d'appairage. Dans cette variante l'utilisateur n'a donc besoin d'effectuer que 3 manipulations simples sur son terminal mobile, au lieu de 4.

Un exemple de mise en oeuvre du procédé d'identification d'au moins une première information de connexion selon un deuxième mode de réalisation de l'invention est maintenant présenté en relation avec la **figure 2****.**

Lors d'une étape E1' (impApp), un utilisateur lance sur son terminal mobile une application « d'appairage » améliorée, dont le but est de connecter le terminal à un point d'accès Wi-Fi après avoir récupéré un SSID et une clé WEP correspondante.

Les étapes E2' à E3' concernent l'identification d'une clé WEP, tandis que les étapes F2' à F3' concernent l'identification d'un identifiant SSID.

Lors d'une étape E2' (obtain), le terminal obtient une représentation d'une clé WEP, par exemple sous forme de code-barres Flashcode et à l'aide de la fonction d'appareil photo du terminal, cette fonction ayant été déclenchée par l'application et l'utilisateur ayant été invité à photographier le Flashcode. Alternativement, le terminal obtient une représentation sonore de la clé WEP, par exemple sous la forme de signal vocal et à l'aide de la fonction d'enregistrement du terminal, cette fonction ayant été déclenchée par l'application et l'utilisateur ayant été invité à enregistrer le signal vocal.

Lors d'une étape E3' (identify), le terminal analyse l'image photographiée et identifie la clé WEP en reconstruisant la suite de caractères la constituant. Alternativement, le terminal analyse le signal vocal enregistré et identifie la clé WEP en reconstruisant la suite de caractères la constituant.

Lors d'une étape F2' (obtain), le terminal obtient une représentation d'un SSID, par exemple sous forme de chaîne de caractères dactylographiée et à l'aide de la fonction d'appareil photo du terminal, cette fonction ayant été déclenchée par l'application et l'utilisateur ayant été invité à photographier le SSID imprimé sur un support. Alternativement, le terminal obtient une représentation sonore du SSID à l'aide de la fonction d'enregistrement du terminal, cette fonction ayant été déclenchée par l'application et l'utilisateur ayant été invité à enregistrer le SSID, par exemple lu à voix haute.

Lors d'une étape F3' (identify), le terminal analyse l'image photographiée et identifie le SSID en reconstruisant la suite de caractères le constituant. Le terminal utilise pour cela une application de reconnaissance optique de caractères, préalablement intégrée ou téléchargée, telle que par exemple l'application Prizmo (nom commercial) de la société Creaceed ou l'application ABBYY (nom commercial et nom de la société). De façon connue, les OCR (nom usuel des logiciels et applications de reconnaissance optique de caractères, initiales de Optical Character Recognition, ou reconnaissance optique de caractères en anglais) fonctionnent sur la base de la numérisation des formes prises par les caractères, et du calcul d'une distance entre une forme à reconnaître et une bibliothèque de formes connues, les formes étant le plus souvent modélisées statistiquement afin de permettre la plus grande variété possible dans chacune des formes. Alternativement, le terminal analyse le signal sonore enregistré et identifie le SSID en reconstruisant la suite de caractères le constituant. Le terminal utilise pour cela une application de reconnaissance vocale de caractères, préalablement intégrée ou téléchargée, telle que par exemple Dragon Dictate (nom commercial) de la société Nuance. De façon connue, les logiciels et applications de reconnaissance vocale de caractères fonctionnent sur la base de la numérisation d'un signal sonore analogique généré par une lecture à voix haute des caractères, et du calcul d'une distance entre le signal numérisé à reconnaître et une bibliothèque d'échantillons connus, les échantillons étant le plus souvent modélisées statistiquement afin de permettre la plus grande variété possible dans les signaux à analyser.

Les étapes E2' et F2' peuvent avoir lieu dans un ordre quelconque.

Dans une alternative avantageuse, illustrée par la ligne pointillée de la figure 2, les étapes E2' et F2' peuvent être réunies en une seule étape si la représentation obtenue comprend deux informations de connexion, l'une correspondant à la clé WEP et l'autre à l'identifiant SSID. La représentation est par exemple une même photographie réunissant un Flashcode pour la clé WEP et une suite de caractères dactylographiée pour le SSID, ou une photographie d'un Flashcode représentant à la fois la clé WEP et le SSID. Alternativement, la représentation est un même signal sonore continu, superposant ou concaténant un signal sonore correspondant à la clé WEP et un autre correspondant à l'identifiant SSID.

Lors d'une étape F4' (connect) ultérieure aussi bien à l'étape E3' que F3', le terminal se connecte au point d'accès Wi-Fi à l'aide du SSID et de la clé WEP précédemment identifiés.

Dans ce deuxième mode de réalisation, l'utilisateur n'a besoin d'effectuer que 3 manipulations simples sur son terminal mobile : le lancement de l'application dont le but est de récupérer une clé WEP et un SSID, la photographie de la représentation de la clé WEP ou son enregistrement sonore, et la photographie de la représentation du SSID, ou son enregistrement sonore. Il n'a jamais besoin d'entrer de chaine de caractères.

Dans l'alternative citée de ce deuxième mode de réalisation, réunissant les étapes E2' et F2', l'utilisateur n'a besoin d'effectuer que 2 manipulations simples sur son terminal mobile : le lancement de l'application dont le but est de récupérer une clé WEP et un SSID, et la photographie unique de la représentation regroupée de la clé WEP et du SSID, ou l'enregistrement du signal sonore réunissant la clé WEP et le SSID.

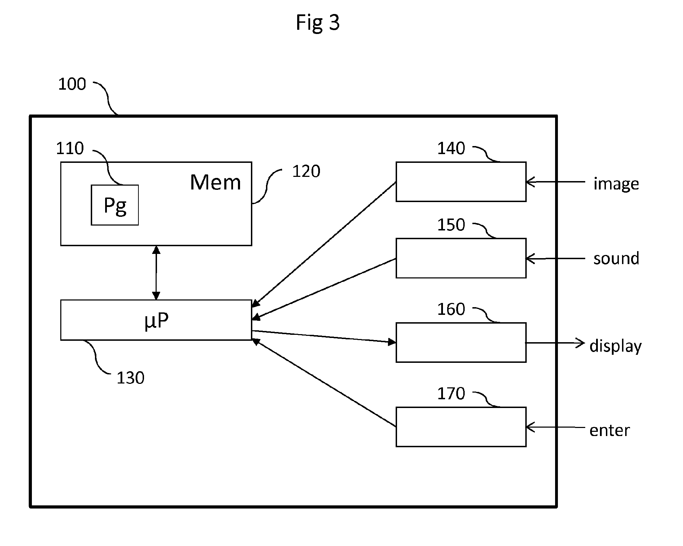

En relation avec la **figure 3****,** on présente maintenant la structure d'un terminal de communication 100, selon l'invention.

Un tel terminal 100 comprend au moins:
- un module d'obtention 150, apte à obtenir une représentation (sound) d'une information de connexion sous forme de signal sonore.

Il peut comprendre en outre:
- un module d'obtention 140, apte à obtenir une représentation (image) d'une information de connexion sous forme d'image,

Un tel terminal 100 comprend également :
- un module d'affichage 160, apte à afficher sur un écran une requête (display) à destination d'un utilisateur,
- un module d'obtention 170, apte à obtenir une instruction (enter) d'un utilisateur au travers d'un clavier ou d'un écran tactile.

Les représentations d'information de connexion ainsi que les instructions de l'utilisateur sont traités par une unité de traitement 130 équipée d'un microprocesseur apte à mettre en oeuvre les moyens constitutifs de l'invention tels que décrits précédemment, en particulier, des moyens d'analyse de représentation et des moyens d'identification d'informations de connexion.

Le terminal de communication 100 selon l'invention comprend en outre une mémoire 120 dans laquelle est stockée un programme d'ordinateur 110 mettant en oeuvre le procédé d'identification d'au moins une information de connexion selon l'invention, qui vient d'être décrit. A l'initialisation, les instructions de code du programme d'ordinateur 110 sont par exemple chargées dans une mémoire RAM, avant d'être exécutées par le processeur de l'unité de traitement 130.

Les exemples de réalisation de l'invention qui viennent d'être présentés ne sont que quelques uns des modes de réalisation envisageables. Entre autres, d'autres représentations d'information de connexion peuvent être utilisée, telles que des représentations sous forme de signal sonore. Dans ce cas les moyens d'analyse sont par exemple des applications telles que Dragon Dictate (nom commercial) de la société Nuance, intégrée dans les terminaux utilisant le système d'exploitation iOS, ou Vlingo (nom commercial de l'application et de la société), une application téléchargeable à partir d'un terminal mobile. De façon connue, ces applications sont basées sur la numérisation des signaux de parole, et sur une modélisation statistique de signaux de parole représentatifs du vocabulaire à reconnaître, et sur le calcul d'une distance entre la trace numérique du signal sonore à reconnaître et celle de chacun des modèles statistiques.

Aussi, le traitement effectué par le terminal peut combiner les différentes formes sonores et visuelles de représentation d'une information de connexion.

Tous ces exemples montrent que l'invention permet de faciliter pour un utilisateur l'opération de connexion d'un terminal à un point d'accès à l'aide d'au moins une information de connexion, et d'en réduire les risques d'échec, voire de les éliminer.

## Revendications

1. **Terminal de communication** apte à se connecter à un noeud d'accès d'un réseau de communication à l'aide d'au moins une première information de connexion, **caractérisé en ce qu'il** comprend les moyens suivants:
- obtention (140, 150) d'une représentation sonore de ladite au moins une première information,
- identification de ladite au moins une première information par analyse de la représentation.

2. **Terminal** selon la revendication 1 **caractérisé en ce que** les moyens d'obtention comprennent des moyens d'acquisition de ladite représentation.

3. **Terminal** selon la revendication 1 **caractérisé en ce que** ladite représentation est générée par des moyens de restitution connectés au noeud d'accès.

4. **Terminal** selon la revendication 1 **caractérisé en ce que** les moyens d'obtention comprennent des moyens de reconnaissance d'un type de représentation parmi un groupe de types de représentations, et des moyens de sélection de moyens d'analyse adaptés au type de représentation.

5. **Terminal** selon la revendication 4 **caractérisé en ce que** le groupe de types de représentation comprend au moins les suivants:
- signal sonore constitué de fréquences multiples,
- signal vocal.

6. **Terminal** selon la revendication 1 ou 4 **caractérisé en ce que** la représentation de ladite au moins une première information comprend un signal sonore et **en ce que** les moyens d'identification comprennent des moyens d'analyse de signal sonore.

7. **Terminal** selon la revendication 6 **caractérisé en ce que** les moyens d'analyse comprennent des moyens de reconnaissance appartenant au groupe comprenant :
- des moyens de reconnaissance de fréquences multiples,
- des moyens de reconnaissance vocale de caractères.

8. **Terminal** selon la revendication 1 **caractérisé en ce que** l'identification de ladite au moins une première information déclenche automatiquement des moyens de connexion du terminal au noeud d'accès.

9. **Terminal** selon la revendication 8 **caractérisé en ce que** la représentation obtenue comprend en outre une deuxième information de connexion, et **en ce que** les moyens d'identification comprennent des moyens de discrimination entre les informations de connexion.

10. **Procédé d'identification** d'au moins une première information de connexion d'un terminal à un noeud d'accès d'un réseau de communication, **caractérisé en ce qu'il** comprend les étapes suivantes:
- obtention (E2, E2', F2') d'une représentation sonore de ladite au moins une première information,
- identification (E3, E3', F3') de ladite au moins une première information par analyse de la représentation.

11. **Programme** d'ordinateur (110) **caractérisé en ce qu'il** comprend des instructions pour la mise en oeuvre du procédé selon la revendication 10, lorsque ce programme (110) est exécuté par un processeur (130).

12. **Support d'enregistrement** (120) d'un programme d'ordinateur (110) selon la revendication 11.
